# FASCICULE DE BREVET EUROPEEN

(11) **EP 3 538 788 B1**
(45) Date de publication et mention de la délivrance du brevet: **26.06.2024**
(21) Numéro de dépôt: 17787459.1
(22) Date de dépôt: 27.10.2017
(51) Int. Cl.: F16H 1/28, F16H 57/08

(54) **DISPOSITIF DE TRANSMISSION MECANIQUE**
MECHANISCHE ÜBERTRAGUNGSVORRICHTUNG
MECHANICAL TRANSMISSION DEVICE

(30) Priorité: 14.11.2016 FR 1661013
(43) Date de publication de la demande: 18.09.2019
(73) Titulaire: Safran Electronics & Defense, 92100 Boulogne-Billancourt (FR)
(72) Inventeur: SEVAGEN, Bertrand, 92100 Boulogne-Billancourt (FR); RAVOUX, Nicolas, 92100 Boulogne-Billancourt (FR); MERLET, Etienne, 92100 Boulogne-Billancourt (FR); IMOUNSSI, Zakaraya, 92100 Boulogne-Billancourt (FR)
(74) Mandataire: Cabinet Boettcher
(86) Numéro de dépôt international: PCT/EP2017/077684
(87) Numéro de publication internationale: WO 2018/086918

(56) Documents cités:
- EP-A1- 2 617 882
- EP-A1- 2 784 192
- EP-A2- 0 369 597
- DE-A1-102009 028 517
- US-A- 2 496 928
- US-A1- 2006 154 778

## Description

L'invention concerne un dispositif de transmission mécanique.

### ARRIERE-PLAN TECHNOLOGIQUE DE L'INVENTION

Dans les dispositifs de transmission mécanique de type train épicycloïdal, le porte-satellites comporte plusieurs satellites qui sont montés sur le porte-satellites par l'intermédiaire d'arbres de rotation respectifs.

Afin d'éviter des déplacements parasites desdits arbres de rotation relativement au porte-satellites, un anneau d'arrêt est généralement associé à chaque arbre de rotation pour bloquer un déplacement axial de l'arbre de rotation correspondant.

Il arrive malheureusement que lors du montage du train épicycloïdal, l'opérateur oublie la mise en place ou fasse une mauvaise mise en place d'un ou plusieurs anneaux d'arrêt. Du fait de leur petite taille, l'oubli ou la mauvaise mise en place d'un ou de plusieurs anneaux d'arrêt n'est pas toujours détecté.

Ceci conduit à la mise en service d'un train épicycloïdal dégradé.

Les documents EP 0 369 597, US 2006/154778 et DE 10 2009 028517 illustrent des dispositifs de l'art antérieur.

Le document US 2 496 928 traite d'un dispositif pour le montage de lentilles.

Les documents EP 2 784 192 et EP 2 617 882 proposent des moyens de coopération entre deux éléments.

### OBJET DE L'INVENTION

Un but de l'invention est de proposer un dispositif de transmission mécanique obviant au moins en partie à l'inconvénient précité.

### BREVE DESCRIPTION DE L'INVENTION

En vue de la réalisation de ce but, on propose un dispositif de transmission mécanique comprenant un porte-satellites et au moins deux satellites montés sur le porte-satellites par l'intermédiaire d'arbres de rotation respectifs.

Selon l'invention, le dispositif comporte un plateau d'arrêt en translation axiale des différents arbres de rotation.

De la sorte, une même pièce assure l'arrêt en translation axiale de tous les arbres de rotation relativement au porte-satellites ce qui simplifie le montage du dispositif de transmission mécanique. En outre, le risque d'oubli de pose du plateau est très faible compte tenu de sa taille (comparativement par exemple à un anneau d'arrêt) : son absence serait aisément détectable.

De façon particulière, le porte-satellites s'étend selon un axe principal et le plateau est coaxial audit axe principal.

Ceci permet par exemple de permettre une découpe locale dans le plateau pour un capteur ou tout autre élément non lié à l'un des arbres de rotation.

De façon particulière, le plateau est agencé au centre du porte-satellites.

De façon particulière, le plateau est agencé à la périphérie du porte-satellites.

De façon particulière, le dispositif comporte au moins une platine comprenant une base et un arbre central prolongeant ladite base, le plateau étant porté par ladite base.

Selon l'invention, le plateau comporte des portions insérées dans des gorges ménagées dans chacun des arbres de rotation. De façon particulière, lesdites gorges sont chacune ménagée respectivement sur une partie seulement de la circonférence de l'arbre de rotation associé.

De la sorte, on empêche une rotation des arbres de rotation autour de leur axe respectif.

Ainsi, le même plateau assure l'arrêt en translation axiale de tous les arbres de rotation relativement au porte-satellites en même temps qu'un blocage de la rotation sur eux-mêmes de chacun desdits arbres de rotation.

Par ailleurs, le plateau est en outre alors applicable aussi bien à des arbres de rotation pleins que des arbres de rotation tubulaires creux, ce que ne permettait pas un anneau d'arrêt conventionnel de l'art antérieur.

Le plateau comporte des portions insérées dans des gorges ménagées dans chacun des arbres de rotation et dans des rainures correspondantes d'au moins une platine du porte-satellites portant les arbres de rotation du porte-satellites, rainures donnant accès auxdites gorges, le plateau étant ainsi porté par ladite platine par coopération avec lesdites rainures.

Le plateau est solidarisé au porte-satellites par encliquetage audit porte-satellites.

Ceci permet d'empêcher en particulier une rotation relative du plateau vis-à-vis de platines du porte-satellites.

Le plateau comporte des portions insérées dans des gorges ménagées dans chacun des arbres de rotation, chacune desdites portions comprenant une butée et une patte d'encliquetage pour l'encliquetage du plateau au porte-satellites au niveau de chacun desdits arbres de rotation.

Ceci permet d'assurer une meilleure solidarisation du plateau au porte-satellites avec différentes zones d'encliquetage.

De façon particulière, le plateau comporte des congés entre ses différentes portions.

De façon particulière, les pattes d'encliquetage sont conformées pour travailler en arc-boutement avec le porte-satellites lorsque le plateau est solidarisé au porte-satellites.

Le plateau est plan.

Les différents éléments du plateau sont ainsi agencés dans un même plan. En particulier, le plateau comporte des butées et des pattes d'encliquetage qui s'étendent dans le même plan que le reste du plateau.

On a ainsi un plateau relativement simple et donc plus précis. Le plateau est également plus robuste, moins coûteux et moins lourd.

D'autres caractéristiques et avantages de l'invention ressortiront à la lecture de la description qui suit d'une mise en œuvre particulière non limitative de l'invention.

### BREVE DESCRIPTION DES DESSINS

L'invention sera mieux comprise à la lumière de la description qui suit de modes de réalisation particuliers, non limitatifs, de l'invention. Il sera fait référence aux figures annexées parmi lesquelles :
- la figure 1 est une vue de côté illustrant une partie d'un dispositif de transmission selon un premier mode de réalisation de l'invention,
- la figure 2 est une vue en coupe de la partie du dispositif illustré à la figure 1,
- la figure 3 est une vue en coupe d'une partie d'un dispositif de transmission selon un deuxième mode de réalisation de l'invention,
- la figure 4 est une vue de côté illustrant une partie d'un dispositif de transmission selon un troisième mode de réalisation de l'invention,
- la figure 5 est une vue en coupe de la partie du dispositif illustré à la figure 4,
- la figure 6 est une vue en coupe d'une partie d'un dispositif de transmission selon un quatrième mode de réalisation de l'invention,
- la figure 7 est une vue en coupe d'une partie d'un dispositif de transmission selon un cinquième mode de réalisation de l'invention.

### DESCRIPTION DETAILLEE DE L'INVENTION

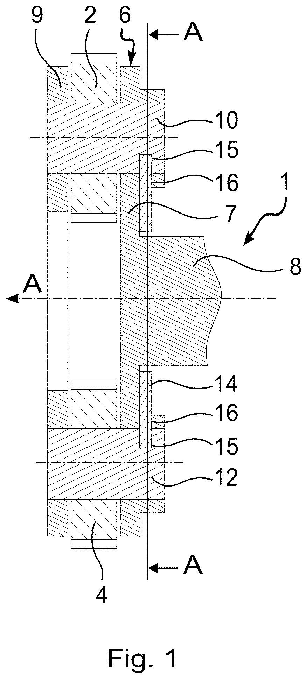

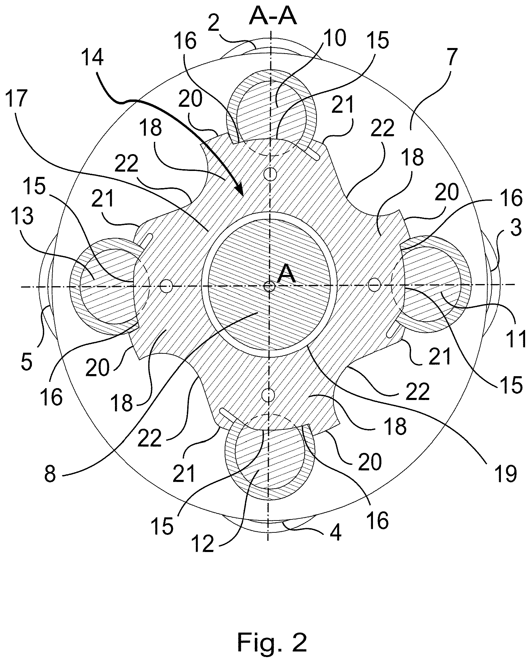

En référence aux figures 1 et 2, un premier mode de réalisation va être à présent décrit.

Le dispositif de transmission mécanique, tel qu'un train épicycloïdal, comprend un porte-satellites 1 et quatre satellites 2, 3, 4, 5. Le porte-satellites 1 comporte typiquement une platine intérieure 6 comprenant une base 7 prolongée d'un arbre central 8 s'étendant selon un axe A, ainsi qu'une platine extérieure 9, les satellites 2, 3, 4, 5 étant agencés entre les deux platines 6, 9. La platine extérieure 9 et la base 7 de la platine intérieure 6 sont ici de section généralement circulaire (selon un plan de coupe de normale l'axe A) et coaxiales à l'axe A.

Le premier satellite 2 est monté pivotant sur le porte-satellites 1 entre les deux platines 6, 9 par l'intermédiaire d'un premier arbre de rotation 10, le deuxième satellite 3 est monté pivotant sur le porte-satellites 1 entre les deux platines 6, 9 par l'intermédiaire d'un deuxième arbre de rotation 11, le troisième satellite 4 est monté pivotant sur le porte-satellites 1 entre les deux platines 6, 9 par l'intermédiaire d'un troisième arbre de rotation 12 et le quatrième satellite 5 est monté pivotant sur le porte-satellites 1 entre les deux platines 6, 9 par l'intermédiaire d'un quatrième arbre de rotation 13. Bien entendu les arbres de rotation 10, 11, 12, 13 sont parallèles entre eux et à l'axe A.

Les arbres de rotation 10, 11, 12, 13 sont ici conformés en cylindre sans épaulement à leurs extrémités.

Ceci permet de limiter le volume axial du dispositif et facilite l'usinage du dispositif.

Le dispositif comporte également un plateau 14 d'arrêt axial des différents arbres de rotation 10, 11, 12, 13 portés par le porte-satellites 1.

Les arbres de rotation 10, 11, 12, 13 comportent chacun une gorge 15 de réception dudit plateau 14. Lesdites gorges 15 sont par exemple ménagées dans les extrémités des arbres de rotation 10, 11, 12, 13 situées au niveau de la platine intérieure 6. La base 7 de la platine intérieure 6 comporte des rainures 16 correspondantes pour donner accès auxdites gorges 15. Les gorges 15 sont par exemple lisses.

De façon particulière, lesdites gorges 15 sont chacune ménagée respectivement sur une partie seulement de la circonférence de l'arbre de rotation 10, 11, 12, 13 associé.

Les gorges 15 sont ainsi conformées de manière à être de forme complémentaire à la portion du plateau 14 insérée dans ladite gorge.

Dans le cas présent, les arbres de rotation 10, 11, 12, 13 sont pleins (mais ils pourraient également être creux).

Le plateau 14 est ici plan. Le plateau 14 est agencé de sorte qu'une normale audit plan s'étende sensiblement parallèlement à l'axe A et donc aux axes des différents arbres de rotation.

Le plateau 14 comporte une partie principale 17 sensiblement circulaire à partir de laquelle s'étendent de manière symétrique quatre extensions radiales 18 identiques entre elles, une extension radiale 18 pour chaque satellite. Le plateau 14 a ainsi globalement la forme d'une croix plane.

Au centre de la partie principale 17 est ménagé un orifice 19 pour l'agencement du plateau 14 autour de l'arbre central 8 de la platine intérieure 6. De la sorte, le plateau 14 est agencé au niveau de la platine intérieure 6 et au centre du porte-satellites 1.

On note par ailleurs que de la sorte le plateau 14 est centré sur l'axe A du porte-satellites. Le plateau 14 est ainsi coaxial audit axe A.

Le plateau 14 n'est toutefois pas fixé à l'arbre central 8. Un jeu existe ainsi ici entre l'orifice 19 du plateau et l'arbre central 8. En revanche, le plateau 14 est porté par la base 7 de la platine intérieure 6 par maintien axial dans les rainures 16.

Le plateau 14 est en outre ici conformé de sorte à pouvoir être encliqueté à ladite base 7 afin de renforcer la fixation du plateau 14 au porte-satellites 1. Ceci permet en outre de bloquer la rotation du plateau 14 autour de l'axe A et donc de la base 7.

A cet effet, chaque extension latérale 18 comporte ici une extrémité libre conformée pour être insérée dans la rainure 16 et dans la gorge 15 de l'arbre de rotation correspondant. Chaque extension latérale 18 est ici conformée sensiblement en arc de cercle. Les différentes gorges 15 présentent donc de manière correspondante, comme indiqué plus haut, également une forme complémentaire en portion de disque de même courbure externe.

Chaque extension latérale 18 est par ailleurs munie d'une butée 20 venant en appui à une extrémité de la rainure 16 contre la base 7 de la platine intérieure 6 au niveau de l'arbre de rotation associé lorsque le plateau 14 est en place dans le porte-satellites 1.

Par ailleurs, une patte d'encliquetage 21 est associée à chaque extrémité libre et agencée sensiblement à l'opposé de la butée 20 associée à ladite extrémité libre.

On note que du fait que le plateau 14 soit plan, la partie principale 17, les extensions radiales 18, les pattes d'encliquetage 21 et les butées 20 s'étendent donc toutes dans le même plan.

De façon particulière, au moins la patte d'encliquetage 21, et de préférence le plateau 14 en entier, est dans un matériau élastiquement déformable. Le plateau 14 est typiquement réalisé dans un matériau pour ressort comme par exemple un acier, un alliage cuivreux, ou un polymère pour ressort.

De préférence, les pattes d'encliquetage 21 sont non seulement élastiquement déformables mais en outre conformées pour travailler en arc-boutement avec la base 7 du porte-satellites 1 lorsque le plateau 14 est solidarisé au porte-satellites 1. Ceci permet d'améliorer ladite solidarisation notamment en cas de vibrations du porte-satellites 1.

En service, on s'assure d'abord que les gorges 15 et les rainures 16 sont bien alignées les unes par rapport aux autres. Sinon on provoque une rotation axiale des arbres de rotation jusqu'à ce que les rainures 16 et les gorges 15 s'étendent dans le prolongement l'une de l'autre.

Puis, il suffit d'insérer le plateau 14 sur l'arbre central 8 et de tourner le plateau 14 pour insérer les extrémités libres dans les rainures 16 du porte-satellites 1 et les gorges 15 des arbres de rotation en commençant par les pattes d'encliquetage 21 desdites extrémités libres jusqu'à ce que les butées 20 viennent reposer contre une extrémité des rainures 16 de la base 7 de la platine intérieure 6. Dans cette position, les différentes pattes d'encliquetage 21 sont ressorties des gorges 15 et rainures 16, et reposent contre la base 7 de la platine intérieure 6 au niveau de l'arbre de rotation associé s'opposant ainsi à une rotation en sens inverse du plateau 14 qui désolidariserait plateau 14 et porte-satellites 1.

Le plateau 14 est donc solidarisé au porte-satellites 1 et s'oppose à des déplacements selon la direction axiale (selon l'axe A) des différents arbres de rotation.

En limitant la gorge 15 à la forme de l'extrémité libre en arc de cercle du plateau 14, le dispositif s'oppose également à la rotation sur eux-mêmes de chacun des arbres de rotation.

En outre, l'encliquetage du plateau 14 au porte-satellites 1, en plus de son maintien axial grâce à la coopération avec les rainures 16, empêche également une rotation relative du plateau 14 vis-à-vis des platines du porte-satellites 1.

La solidarisation du plateau 14 au porte-satellites 1 est ainsi simple et rapide.

Par ailleurs, le dispositif ainsi créé présente une bonne robustesse du fait qu'aucune déformation plastique n'est nécessaire pour solidariser plateau 14 et porte-satellites 1.

En outre, le porte-satellites 1 ne comporte pas d'entailles (comme une gorge) dans les zones les plus sollicitées du porte-satellites 1 comme notamment les zones de jonction entre la platine extérieure 9 et la platine intérieure 6.

De préférence, le plateau 14 est conformé de sorte à présenter des congés 22 entre ses différentes extensions latérales 18. De la sorte, l'opérateur peut positionner aisément le plateau 14 en position sur l'arbre central 8 en faisant correspondre un arbre de rotation à chaque congé 22. Il ne lui reste plus alors qu'à provoquer la rotation du plateau 14 relativement à la platine intérieure 6.

On note que le retrait du plateau 14 peut être réalisé de manière destructive (ce qui n'est que peu gênant au vu du faible coût de production de ladite pièce) ou de manière non destructive (en s'opposant à l'extension des pattes d'encliquetage 21 pour les faire de nouveau pénétrer dans la rainure 16 et la gorge 15 associées, par exemple à l'aide d'un outil, pour permettre la rotation inverse du plateau 14) .

Ainsi, le plateau 14 est intrinsèquement irréversible. A moins de disposer d'un outil spécial, le plateau 14 s'avère indémontable et ce quels que soit les efforts et les vibrations que subit le dispositif.

Un tel dispositif peut par exemple être utilisé dans le domaine des actionneurs de surfaces de vol (comme les gouvernes) sur les aéronefs.

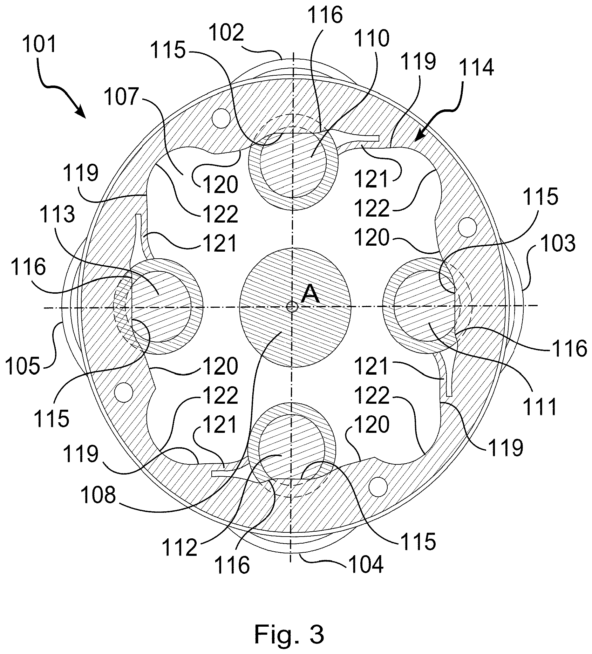

Un deuxième mode de réalisation va être à présent décrit en liaison avec la figure 3.

Dans ce deuxième mode de réalisation, le porte-satellites 101 est identique au premier mode de réalisation. En revanche le plateau 114 est différent.

Ainsi, au lieu d'être agencé au centre de la platine intérieure, le plateau 114 est agencé en périphérie de la platine intérieure. Le plateau 114 est ainsi conformé pour entourer extérieurement les quatre arbres de rotation et non plus intérieurement.

De la sorte, le plateau 114 est conformé en disque avec une ouverture 119 de section polygonale (selon l'axe A) pour l'agencement du plateau 114 autour des arbres de rotation. Le plateau 114 est ainsi agencé au niveau de la platine intérieure à la périphérie de la platine intérieure.

Le plateau 114 est ici plan. Le plateau 114 est agencé de sorte qu'une normale audit plan s'étende sensiblement parallèlement à l'axe A et donc aux axes des différents arbres de rotation.

On note par ailleurs que dans ce mode de réalisation également, le plateau 114 est centré sur l'axe A du porte-satellites. Le plateau 114 est notamment coaxial audit axe A.

Ladite ouverture 119 est ici de section généralement carrée (selon l'axe A), à chaque côté du carré étant associé l'un des arbres de rotation.

Le plateau 114 est ainsi porté par la base 107 de la platine intérieure par maintien axial dans les rainures 116 de ladite base 107.

Le plateau 114 est en outre également conformé de sorte à pouvoir être encliqueté à ladite base 107 afin de renforcer la fixation du plateau 114 au porte-satellites 101. Ceci permet en outre de bloquer la rotation du plateau 114 autour de l'axe A et donc de la base 107.

A cet effet, chaque côté de l'ouverture 119 est conformé pour être inséré dans la rainure 116 et dans la gorge 115 de l'arbre de rotation correspondant.

Chaque côté est par ailleurs muni d'une butée 120 venant en appui à une extrémité de la rainure 116 contre la base 107 de la platine intérieure au niveau de l'arbre de rotation associé lorsque le plateau 114 est solidarisé au porte-satellites 101.

Par ailleurs, une patte d'encliquetage 121 est associée à chaque côté, agencée sensiblement à l'opposé de la butée 120 associée audit côté.

On note que du fait que le plateau 114 soit plan, les pattes d'encliquetage 121 et les butées 120 s'étendent donc toutes dans le même plan que le reste du plateau 114.

De façon particulière, au moins la patte d'encliquetage 121, et de préférence le plateau 114 en entier, est dans un matériau élastiquement déformable. Le plateau 114 est typiquement réalisé dans un matériau pour ressort comme par exemple un acier, un alliage cuivreux, ou un polymère pour ressort.

De préférence, les pattes d'encliquetage 121 sont non seulement élastiquement déformables mais en outre conformées pour travailler en arc-boutement avec le porte-satellites 101 lorsque le plateau 114 est solidarisé au porte-satellites 101. Ceci permet d'améliorer ladite solidarisation notamment en cas de vibrations.

En service, on s'assure d'abord que les gorges 115 et les rainures 116 sont bien alignées les unes par rapport aux autres. Sinon on provoque une rotation axiale des arbres de rotation jusqu'à ce que les rainures 116 et les gorges 115 s'étendent dans le prolongement l'une de l'autre.

Puis, il suffit d'insérer le plateau 114 autour des arbres de rotation et de tourner le plateau 114 pour insérer les côtés de l'ouverture 119 dans les rainures 116 et les gorges 115 des arbres de rotation adjacents en commençant par les pattes d'encliquetage 121 desdits côtés jusqu'à ce que les butées 120 viennent reposer contre l'extrémité de la rainure 116 de la base 107 de la platine intérieure. Dans cette position, les différentes pattes d'encliquetage 121 sont ressorties des gorges 115 et des rainures 116 et reposent contre la base 107 de la platine intérieure au niveau de l'arbre de rotation associé s'opposant ainsi à une rotation en sens inverse du plateau 114 qui désolidariserait plateau 114 et porte-satellites 101.

Le plateau 114 est donc solidarisé au porte-satellites 101 et s'oppose alors à des déplacements selon la direction axiale (selon l'axe A) des différents arbres de rotation.

En limitant la gorge 115 à la forme du côté de l'ouverture 119 du plateau 114, le dispositif s'oppose également à la rotation sur eux-mêmes de chacun des arbres de rotation.

En outre, l'encliquetage du plateau 114 au porte-satellites 101, en plus de son maintien axial grâce à la coopération avec les rainures 116, empêche également une rotation relative du plateau 114 vis-à-vis des platines du porte-satellites 101. La solidarisation du plateau 114 au porte-satellites 101 est ainsi simple et rapide.

Par ailleurs, le dispositif ainsi créé présente une bonne robustesse du fait qu'aucune déformation plastique n'est nécessaire pour monter le plateau 114 sur le porte-satellites 101.

En outre, le porte-satellites 101 ne comporte pas d'entailles (comme une gorge) dans les zones les plus sollicitées du porte-satellites 101 comme notamment les zones de jonction entre la platine extérieure et la platine intérieure.

De préférence, le plateau 114 est conformé de sorte à présenter des congés 122 entre les différents côtés. De la sorte, l'opérateur peut positionner aisément le plateau 114 en position autour des arbres de rotation en faisant correspondre un arbre de rotation à chaque congé 122. Il ne lui reste plus alors qu'à provoquer la rotation du plateau 114 relativement à la platine intérieure.

On note que le retrait du plateau 114 peut être réalisé de manière destructive (ce qui n'est que peu gênant au vu du faible coût de production de ladite pièce) ou de manière non destructive (en s'opposant à l'extension des pattes d'encliquetage 121 pour les faire de nouveau pénétrer dans la rainure 116 et la gorge 115 associées, par exemple à l'aide d'un outil, pour permettre la rotation inverse du plateau 114).

Ainsi, le plateau 114 est intrinsèquement irréversible. A moins de disposer d'un outil spécial, le plateau 114 s'avère indémontable et ce quels que soit les efforts et les vibrations que subit le dispositif.

Le premier mode de réalisation et le deuxième mode de réalisation offrent ainsi des agencements différents de porte-satellites permettant à l'invention de s'adapter à un grand nombre d'applications selon l'encombrement périphérique au porte-satellites.

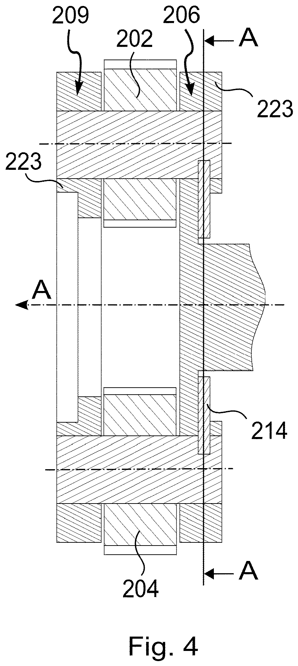

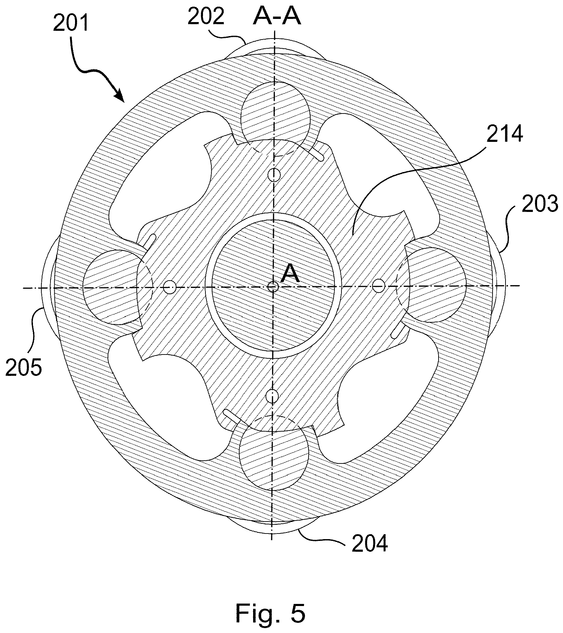

Un troisième mode de réalisation va être à présent décrit en liaison avec les figures 4 et 5.

Dans ce troisième mode de réalisation, le plateau 214 est identique à celui du premier mode de réalisation. En revanche le porte-satellites 201 présente une structure différente car plus renforcée relativement à celle du premier mode de réalisation.

Ainsi la platine intérieure 206 comme la platine extérieure 209 comportent une couronne périphérique 223 entourant extérieurement les différents arbres de rotation.

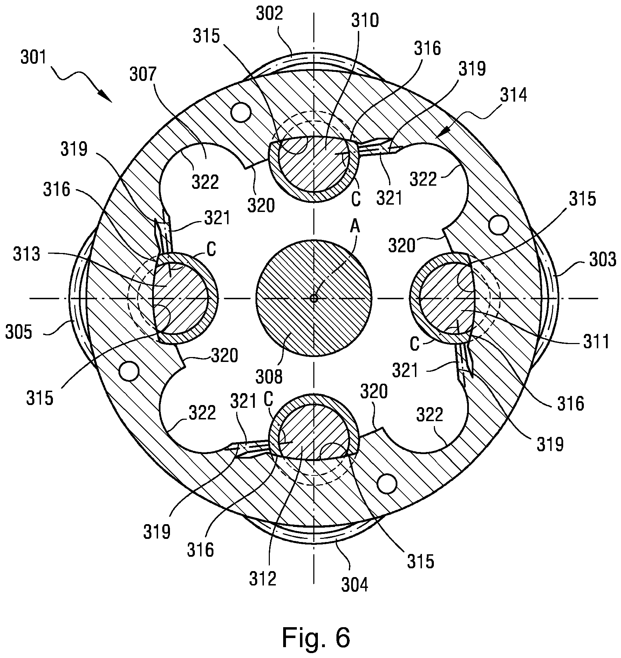

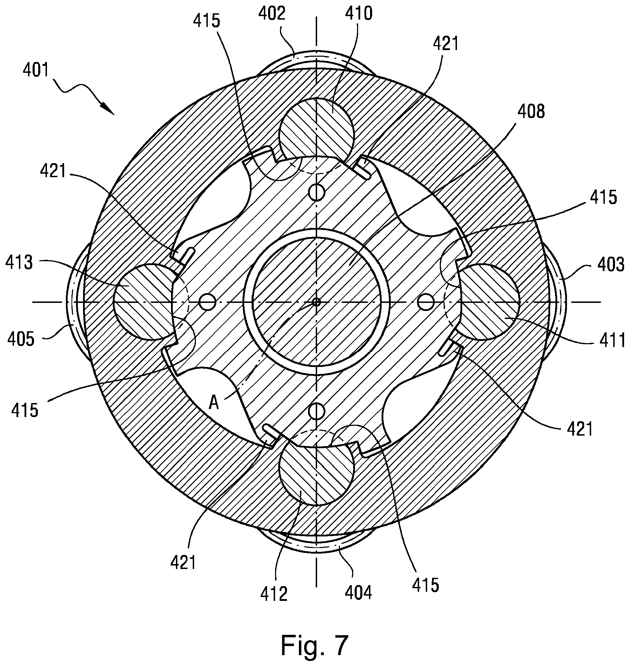

En référence aux figures 6 et 7, d'autres modes de réalisation sont bien entendu envisageables. Dans les précédents modes de réalisation, les plateaux étaient indémontables (à moins d'avoir recours à un outil spécial). Ceci était dû en particulier au fait que les efforts ou les vibrations pouvant s'appliquer sur les pattes d'encliquetage ne tendaient pas à désengager lesdites pattes.

Il est possible de modifier la forme du dispositif afin d'accentuer cet effet. En particulier, la modification du dispositif afin de limiter une déformation des pattes d'encliquetage sous les efforts et vibrations subis en service permet d'accentuer cet effet.

Par exemple, en référence à la figure 6, et selon un quatrième mode de réalisation, ce sont les pattes d'encliquetage qui sont conformées pour limiter la déformation desdites pattes d'encliquetage en service.

Chaque patte d'encliquetage 314 est ici conformée de sorte à s'étendre selon une direction C qui est sensiblement perpendiculairement à une face d'appui de ladite patte d'encliquetage contre la base 307.

En référence à la figure 7, et selon un cinquième mode de réalisation, en complément ou en remplacement du quatrième mode de réalisation, ce sont le porte-satellite 401 et/ou le plateau 414 qui sont conformés pour limiter la déformation des pattes d'encliquetage en service.

Par exemple une couronne de la platine intérieure et/ou de la platine extérieure est conformée de sorte à s'étendre davantage en direction des pattes d'encliquetage afin de limiter leurs déformations en service.

Bien entendu l'invention n'est pas limitée aux modes de réalisation décrits et on peut y apporter des variantes de réalisation sans sortir du cadre de l'invention tel que défini par les revendications.

En particulier, le dispositif de transmission mécanique pourra être différent de ce qui a été décrit. Ainsi, bien qu'ici le dispositif de transmission mécanique comporte quatre satellites, le dispositif pourra comporter un nombre de satellites différent et par exemple deux ou trois. Le porte-satellites pourra ne comporter qu'une seule platine. La ou les platines pourront prendre une autre forme que celle indiquée par exemple présenter une portion centrale sensiblement triangulaire avec ou non une portion externe de forme différente ou identique. Bien qu'ici les arbres de rotation des satellites ne présentent pas d'épaulement à leurs extrémités, lesdits arbres pourront comporter des épaulements à l'une ou les deux extrémités. Les épaulements viendront alors reposer sur des faces principales des platines extérieures ou intérieures.

Bien qu'ici les gorges soient lisses, les gorges des arbres de rotation pourront être moletées afin de favoriser une anti-rotation desdites arbres autour de leur axe par frottement du plateau contre ce moletage. Les pattes d'encliquetage pourraient alors être conformées pour s'engager dans les gorges lorsque le plateau est en place sur le porte-satellites (au lieu de reposer contre le porte-satellites) pour améliorer cette fonction anti-rotation.

Bien qu'ici les gorges ne s'étendent pas sur toute la circonférence des arbres de rotation associés, lesdites gorges pourront s'étendre sur toute la circonférence des arbres de rotation associés. Dans les deux cas, les arbres de rotation pourront tout aussi bien être creux que pleins.

De même le plateau pourra être conformé différemment de ce qui a été dit.

Par exemple l'orifice central pourra avoir une forme différente que circulaire dans le premier mode de réalisation et que polygonale dans le deuxième mode de réalisation. Le plateau pourrait comporter plus d'extensions latérales et/ou de côtés d'ouverture et/ou de pattes d'encliquetage et/ou de butées que le porte-satellites ne comporte d'arbres de rotation. Le plateau pourrait ainsi être conformé pour présenter deux pattes d'encliquetage par arbre de rotation ce qui améliorerait encore davantage la solidarisation du plateau au porte-satellites.

Le plateau pourra être solidarisé au porte-satellites autrement qu'à la base de la platine intérieure comme par à l'arbre de la platine intérieure ou encore à la platine extérieure.

## Revendications

1. Dispositif de transmission mécanique comprenant un porte-satellites (1 ; 101 ; 201) et au moins deux satellites (2 ;3 ;4 ; 5) montés sur le porte-satellites par l'intermédiaire d'arbres de rotation respectifs (10 ;11 ;12 ;13), le dispositif comportant un plateau (14 ; 114 ; 214) d'arrêt en translation axiale des différents arbres de rotation, le plateau (14 ; 114 ; 214) étant solidarisé au porte-satellites (1 ; 101 ; 201), le plateau (14 ; 114 ; 214) comportant des portions insérées dans des gorges (15 ; 115) ménagées dans chacun des arbres de rotation et dans des rainures (16 ; 116) correspondantes d'au moins une platine (6 ;9) du porte-satellites (1 ; 101 ; 201) portant les arbres de rotation du porte-satellites, les rainures donnant accès auxdites gorges (15 ;115), le plateau étant ainsi porté par ladite platine par coopération avec lesdites rainures,
**caractérisé en ce que** le plateau est solidarisé au porte-satellite par encliquetage audit porte-satellites, chacune desdites portions du plateau comprenant une butée (20) et une patte d'encliquetage (21) pour l'encliquetage du plateau au porte-satellites au niveau de chacun desdits arbres de rotation,
dans lequel le plateau (14 ; 114 ; 214) est plan.

2. Dispositif selon l'une des revendications précédentes, dans lequel le porte-satellites (1 ; 101 ; 201) s'étend selon un axe principal (A) et le plateau (14 ; 114 ; 214) est coaxial audit axe principal.

3. Dispositif selon la revendication 2, dans lequel le plateau (14 ; 214) est agencé au centre du porte-satellites.

4. Dispositif selon la revendication 2, dans lequel le plateau (114) est agencé à la périphérie du porte-satellites.

5. Dispositif selon l'une des revendications précédentes, dans lequel la platine comprend une base (7, 107) et un arbre central (8, 108) prolongeant ladite base, le plateau (14 ; 114 ; 214) étant porté par ladite base.

6. Dispositif selon l'une des revendications précédentes, dans lequel les gorges (15 ; 115) ménagées dans chacun des arbres de rotation sont chacune ménagées respectivement sur une partie seulement de la circonférence de l'arbre de rotation associé.

7. Dispositif selon l'une des revendications précédentes, dans lequel le plateau (14 ; 114 ; 214) comporte des congés (22) entre ses différentes portions.

8. Dispositif selon l'une des revendications précédentes, dans lequel le dispositif comprend au moins trois satellites (2 ;3 ;4 ;5).

## Patentansprüche

1. Mechanische Übertragungsvorrichtung, umfassend einen Planetenträger (1; 101; 201) und mindestens zwei Planeten (2; 3; 4; 5), die an dem Planetenträger über jeweilige Drehwellen (10; 11; 12; 13) montiert sind, wobei die Vorrichtung eine Anschlagplatte (14; 114; 214) zum Stoppen der axialen Translation der verschiedenen Drehwellen umfasst, wobei die Anschlagplatte (14; 114; 214) durch Einrasten am Planetenträger fest mit dem Planetenträger (1; 101; 201) verbunden ist, wobei die Anschlagplatte (14; 114; 214) Abschnitte umfasst, die in Nuten (15; 115) eingefügt werden, die in jeder der Drehwellen ausgebildet sind, und in entsprechende Schlitze (16; 116) mindestens einer Platte (6; 9) des Planetenträgers (1; 101; 201), die die Drehwellen des Planetenträgers trägt, Schlitze, die Zugang zu den genannten Nuten (15; 115) geben, wobei die Anschlagplatte somit von der genannten Platte durch Zusammenwirken mit den genannten Schlitzen getragen wird, **dadurch gekennzeichnet, dass** jeder der genannten Abschnitte der Anschlagplatte einen Anschlag (20) und eine Einrastlasche (21) zum Einrasten der Anschlagplatte am Planetenträger im Bereich jeder der genannten Drehwellen umfasst, wobei die Anschlagplatte (14; 114; 214) eben ist.

2. Vorrichtung nach einem der vorhergehenden Ansprüche, bei der sich der Planetenträger (1; 101, 201) entlang einer Hauptachse (A) erstreckt und die Anschlagplatte (14; 114; 214) koaxial zur genannten Hauptachse ist.

3. Vorrichtung nach Anspruch 2, bei der die Platte (14; 214) in der Mitte des Planetenträgers angeordnet ist.

4. Vorrichtung nach Anspruch 2, bei der die Anschlagplatte (114) am Umfang des Planetenträgers angeordnet ist.

5. Vorrichtung nach einem der vorhergehenden Ansprüche, bei der die Vorrichtung die Platte umfasst, welche eine Basis (7, 107) und eine zentrale Welle (8, 108) umfasst, die die genannte Basis verlängert, wobei die Anschlagplatte (14; 114; 214) von der genannten Basis getragen wird.

6. Vorrichtung nach einem der vorhergehenden Ansprüche, bei der die Nuten (15; 115), die in jeder der Drehwellen ausgebildet sind, jeweils an nur einem Teil des Umfangs der dazugehörigen Drehwelle ausgebildet sind.

7. Vorrichtung nach einem der vorhergehenden Ansprüche, bei der die Anschlagplatte (14; 114; 214) Hohlkehlen (22) zwischen ihren verschiedenen Abschnitten umfasst.

8. Vorrichtung nach einem der vorhergehenden Ansprüche, bei der die Vorrichtung mindestens drei Planeten (2; 3; 4; 5) umfasst.

## Claims

1. A mechanical transmission device comprising a planet carrier (1; 101; 201) and at least two planets (2;3;4;5) mounted on the planet carrier by means of respective rotation shafts 10;11;12;13), the device including a stop (14; 114; 214) for stopping movement of the various rotation shafts in axial translation, the stop (14; 114; 214) being shaped to be secured to the planet carrier (1; 101; 201), the stop (14; 114; 214) including portions inserted in grooves (15; 115) formed in each of the rotation shafts and in corresponding slots (16; 116) in at least one plate (6;9) of the planet carrier (1; 101; 201) carrying the rotation shafts of the planet carrier, which slots give access to said grooves (15;115), the stop thus being carried by said plate by co-operation with said slots, being **characterized in that** the stop is shaped to be secured to the planet carrier by snap-fastening to said planet carrier, each of said portions of the stop including an abutment (20) and a snap-fastener tab (21) for snap-fastening the stop to the planet carrier at each of said rotation shafts, with the stop (14; 114; 214) being plane.

2. A device according to any preceding claim, wherein the planet carrier (1; 101; 201) extends about a main axis (X) and the stop (14; 114; 214) is shaped to be coaxial with said main axis.

3. A device according to claim 2, wherein the stop (14; 214) is shaped to be arranged at the center of the planet carrier.

4. A device according to claim 2, wherein the stop (114) is shaped to be arranged at the periphery of the planet carrier.

5. A device according to any preceding claim, the plate has a base (7, 107) and a central shaft (8, 108) extending said base, the stop (14; 114; 214) being carried by said base.

6. A device according to any preceding claim, wherein each of the grooves (15; 115) formed in each of the rotation shafts are arranged respectively over a fraction only of the circumference of the associated rotation shaft.

7. A device according to any preceding claim, wherein the stop (14; 114; 214) includes rounded fillets (22) between its various portions.

8. A device according to any preceding claim, wherein the device includes at least three planets (2;3;4;5).
